# EUROPEAN PATENT APPLICATION

(11) **EP 4 017 118 A1**
(43) Date of publication of application: **22.06.2022**
(21) Application number: 19949171.3
(22) Date of filing: 17.10.2019
(51) Int. Cl.: H04W 48/00, H04W 76/00

(54) **COMMUNICATION METHOD, COMMUNICATION DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: YANG, Ning, Dongguan, Guangdong 523860 (CN)
(74) Representative: Taor, Simon Edward William
(86) International application number: PCT/CN2019/111764
(87) International publication number: WO 2021/072717

(57) **Abstract**

Disclosed is a communication method, comprising: a source node determines a target path according to the target service parameter of a data packet to be transmitted, the target service parameter comprising at least one of the following information: the service quality requirement of the data packet and a slice corresponding to the data packet; the source node sends the data packet to a target node on the basis of the target path.

## Description

### TECHNICAL FIELD

The present disclosure relates to mobile communication technologies, and in particular to a communication method, a communication device and a storage medium.

### BACKGROUND

In the development of wireless networks, wireless network architectures are mainly composed of three parts: core networks, access networks, and terminals, where layers are connected through fixed interfaces. However, in future wireless networks, in addition to typical base stations serving as access network elements (also called access nodes), other types of access nodes may also be used to provide services to users, including mobile access nodes and immovable access nodes. When a source node sends data to a target node, how to choose data transmission paths between the source node and the target node from among these access nodes has become a technical problem to be solved.

### SUMMARY

Embodiments of the present disclosure provide a communication method, a communication device and a storage medium, which enables to select a data transmission path between a source node and a target node when the source node sends data to the target node.

In a first aspect, the embodiments of the present disclosure provide a communication method, including:
determining, by a source node, a target path according to a target service parameter of a data packet to be transmitted, wherein the target service parameter includes at least one of a service quality requirement of the data packet and a slice corresponding to the data packet; and
sending, by the source node, the data packet to a target node based on the target path.

In a second aspect, the embodiments of the present disclosure provide a communication method, including:
receiving, by a target node, a data packet sent by a source node based on a target path, wherein the target path is determined by the source node according to a target service parameter of the data packet, and the target service parameter includes at least one of a service quality requirement of the data packet and a slice corresponding to the data packet.

In a third aspect, the embodiments of the present disclosure provide a communication device, including:
a determining unit, configured to determine a target path according to a target service parameter of a data packet to be transmitted, wherein the target service parameter includes at least one of a service quality requirement of the data packet and a slice corresponding to the data packet; and
a sending unit, configured to send the data packet to a target node based on the target path.

In a fourth aspect, the embodiments of the present disclosure provide a communication device, including:
a second receiving unit, configured to receive a data packet sent by a source node based on a target path, wherein the target path is determined by the source node according to a target service parameter of the data packet, and the target service parameter includes at least one of a service quality requirement of the data packet.

In a fifth aspect, the embodiments of the present disclosure provide a communication device, including a processor and a memory for storing a computer program that can run on the processor, wherein the processor is configured to execute steps of the above-mentioned communication method performed by the communication device, when executing the computer program.

The embodiments of the present disclosure provide a storage medium storing an executable program, wherein the executable program, when being executed by a processor, implements the above-mentioned communication method performed by the communication device.

The communication method provided by the embodiments of the present disclosure includes: the source node determines the target path according to the target service parameter of the data packet to be transmitted, the target service parameter includes at least one of the service quality requirement of the data packet and the slicing corresponding to the data packet; and the source node sends the data packet to the target node based on the target path. Therefore, the path for transmitting the data packet is selected in a network based on the service quality requirement of the data packet or the slice corresponding to the data packet.

### BRIEF DESCRIPTION OF THE DRAWINGS

FIG. 1 is a schematic diagram of an optional 3G network architecture according to an embodiment of the present disclosure;
FIG. 2 is a schematic diagram of an optional 4G network architecture according to an embodiment of the present disclosure;
FIG. 3 is a schematic diagram of an optional 5G network architecture according to an embodiment of the present disclosure;
FIG. 4 is a schematic diagram of an optional future wireless network architecture according to an embodiment of the present disclosure;
FIG. 5 is a schematic diagram of an optional scenario of a communication method according to an embodiment of the present disclosure;
FIG. 6 is a schematic diagram of an optional flow of a communication method according to an embodiment of the present disclosure;
FIG. 7 is a schematic diagram of an optional flow of a communication method according to an embodiment of the present disclosure;
FIG. 8 is a schematic diagram of an optional flow of a communication method according to an embodiment of the present disclosure;
FIG. 9 is a schematic diagram of an optional flow of a communication method according to an embodiment of the present disclosure;
FIG. 10 is a schematic diagram of an optional flow of a communication method according to an embodiment of the present disclosure;
FIG. 11 is a schematic diagram of an optional scenario of a communication method according to an embodiment of the present disclosure;
FIG. 12 is a schematic diagram of an optional structure of a communication device implemented in the present disclosure;
FIG. 13 is a schematic diagram of an optional structure of a communication device implemented in the present disclosure; and
FIG. 14 is a schematic diagram of an optional structure of an electronic device provided by an embodiment of the present disclosure.

### DETAILED DESCRIPTION

In order to enable a thorough understanding of features and technical contents of embodiments of the present disclosure, implementations of the embodiments of the present disclosure will be described in detail below with reference to the accompanying drawings. The accompanying drawings are for reference only and are not used to limit the embodiments of the present disclosure.

Before describing a communication method provided by the embodiments of the present disclosure in detail, a brief description of a wireless communication network will be provided first.

The wireless communication network has gone through development stages from 1G to 5G. In the development process of wireless communication network, the overall network architecture can basically be divided into three layers, including three layers of a core network, an access network and a terminal, and layers are connected through interfaces.

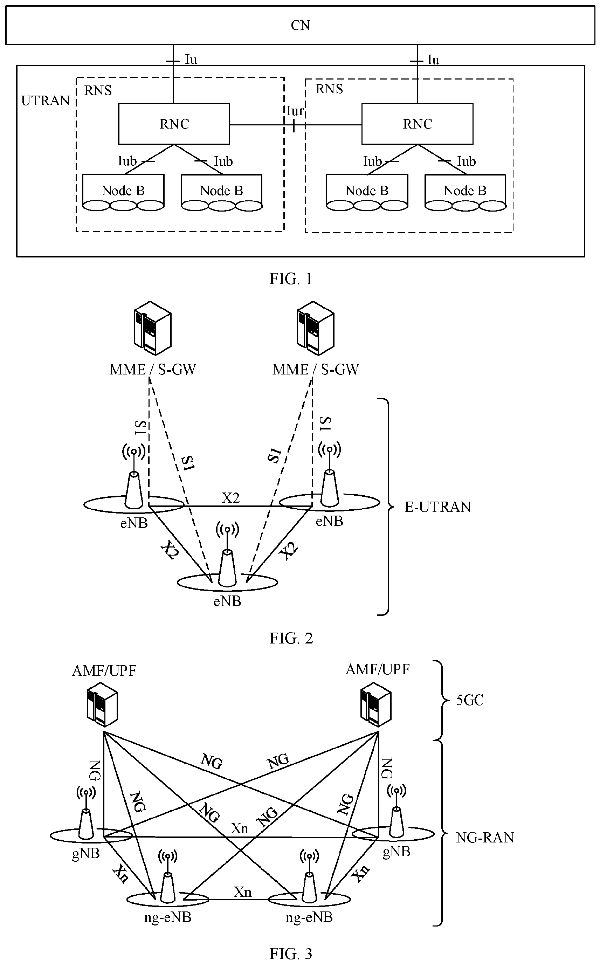

In a 3G network, as shown in FIG. 1, the access network part of the 3G network is called UMTS terrestrial radio access network (UTRAN). UTRAN includes one or more radio network subsystems (RNSs). Network elements in RNS include a radio network controller (RNC) and a Node B (NB). Network elements in the core network (CN) include a mobile switching center (MSC), a serving GPRS support node (SGSN), and a gateway GPRS support node (GGSN). MSC is responsible for circuit domain services such as voice and short messages. SGSN/GGSN is responsible for packet domain services such as data transmission. Individual network elements in the 3G network are connected through fixed interfaces such as Iu interfaces, Iub interfaces, and Iur interfaces, where CN and RNC are connected through the Iu interface, and RNC and Node B are connected through the Iub interface. Different RNCs are connected through the Iur interface.

In a 4G network, as shown in FIG. 2, the 4G network greatly simplifies the 3G network. For example, the circuit domain network architecture is removed and some network elements, such as RNC and NB, are merged. The access network part of the 4G network is called an evolved UMTS terrestrial radio access network (E-UTRAN), where network elements in CN include a mobility management function (MME) network element, a serving gateway (S-GW), etc. Network elements in E-UTRAN include an evolved Node B (eNB). Individual network elements in the 4G network are connected through fixed interfaces such as X2 interfaces and S1 interfaces. Different eNBs are connected through X2 interfaces, and eNB and MME/SGW are connected through S1 interfaces.

In a 5G network, as shown in FIG. 3, compared with the 4G network, the 5G network has not significantly changed in terms of access network. However, for the core network, due to the needs of vertical services and virtualization, the core network elements have been further refined, thus forming a new architecture. The access network part of the 5G network is called next generation radio access networking (NG-RAN), and the core network part of the 5G network is called 5G core networking (5GC), where network elements in 5GC include a mobility management function (AMF) network element, a user plane function (UPF) network element, and so on. Network elements in NG-RAN include gNB and ng-eNB. Individual network elements in the 5G network are connected through fixed interfaces. gNB (ng-eNB) and AMF/UPF are connected through an NG interface, and gNB and ng-eNB are connected through an Xn interface.

As can be seen from FIGS. 1 to 3, with the evolution of the network architecture from the traditional network architecture to the present, it is mainly composed of three parts: the core network, the access network, and the terminal. The terminal corresponds to one or more access network elements of the same type; and the access network corresponds to one or more core network elements of the same type on the control plane and the user plane, respecti vel y.

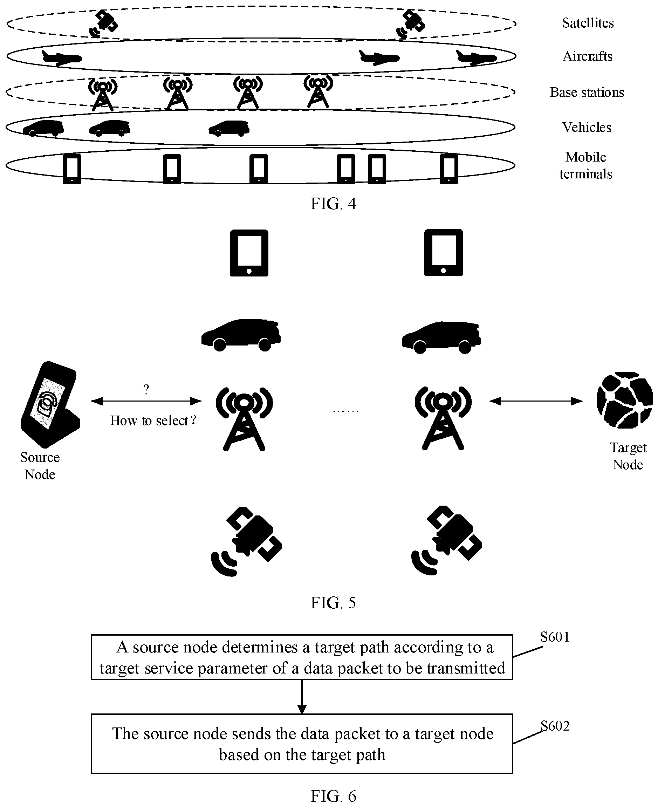

However, in a future wireless network, in addition to typical base stations serving as access network elements (also called access nodes), other types of access nodes may also be used to provide services to users, including mobile access nodes and immobile access nodes. The mobile access nodes include: satellites, aircrafts, vehicles, mobile terminals, etc.; the immobile access nodes include: base stations, fixed terminals such as routers and televisions, etc., as shown in FIG. 4.

Among all the above access nodes, some access nodes are stable nodes, such as the base stations or the fixed terminals; some access nodes are unstable nodes, such as the aircrafts, the vehicles, or the mobile terminals. When performing data transmission, the terminal can directly communicate with a destination network or a destination terminal through a Uu/sidelink (SL) interface, or it can communicate with the destination network or the destination terminal through two hops or even multiple hops. When the terminal needs to transmit data, whether a target node of the data of the terminal is a network server or another terminal, the source terminal will face multi-path selection and feedback problems, and how the terminal selects different network paths for data transmission according to service requirements and/or network configurations has not been defined. For example, in the future wireless network shown in FIG. 5, for the source node and the target node, the access nodes include: the mobile terminals, the vehicles, base station satellites, etc., and how to select a path for data transmission between the source node and the target node from among these access nodes has not yet been defined.

In view of the above-mentioned problems, a technical solution of the embodiments of the present disclosure proposes a communication method, which can be applied to the future wireless network.

Here, a device that performs communication in the future wireless network can be called a communication device, where a communication device that sends a data packet is a source node, a target communication device to which the data packet is sent by the source node is a target node, and a communication device through which a path between the source node and the target node for data transmission passes is a forwarding node. In the future wireless network, the access node can function as the source node, the target node, or the forwarding node.

Exemplarily, the future wireless network system to which the embodiments of the present disclosure are applied may be as shown in FIG. 4. The access nodes include mobile access nodes and immobile access nodes. The mobile access nodes include: satellites, aircrafts, vehicles, mobile terminals, etc.; and the immobile access nodes include: base stations, fixed terminals, such as routers and televisions, etc..

The core network of the future wireless network shown in FIG. 4 adopts the core networks of following communication systems: a Long Term Evolution (LTE) system, a LTE Frequency Division Duplex (FDD) system, a LTE Time Division Duplex (TDD) system, a Universal Mobile Telecommunication System (UMTS) communication system, a 5G system or a future communication system, etc.

Here, a communication device in the future wireless system that provides communication coverage for a specific geographic area and can communicate with terminal devices located in the coverage area is referred to as a network device. The network device can be eNB in the LTE system, gNB in the NR/5G system, or a wireless controller in a Cloud Radio Access Network (CRAN). Alternatively, the network device can be a mobile switching center, a relay station, an access point, an on-vehicle device, a wearable device, a hub, a switch, a network bridge, a router, a communication satellite, a network side device in a 5G network, or a network device in a future evolved Public Land Mobile Network (PLMN), etc.

In an example, in addition to the access points shown in FIG. 4, the communication device in the future wireless network provided by the embodiments of the present disclosure may include other network entities such as a network controller and a mobility management entity, which is not limited in the embodiments of the present disclosure.

As shown in FIG. 6, an optional processing flow of a communication method provided by the embodiments of the present disclosure includes the following.

In S601, a source node determines a target path according to a target service parameter of a data packet to be transmitted.

The target service parameter includes at least one of the following information: a service quality requirement of the data packet and a slice corresponding to the data packet

Before the source node sends the data packet to be transmitted to a target node, it determines the service quality requirement and/or the corresponding slice of the data packet to be transmitted, and select a path formed by access nodes used to transmit the data packet from among multiple access points between the source node and the target node. Optionally, the target path includes one path. Optionally, the target path includes multiple paths.

The source node in the embodiments of the present disclosure may be a terminal device or a base station, and the target node in the embodiments of the present disclosure may be the terminal device or the base station.

The service quality requirement includes at least one of delay, rate, and reliability.

Taking the service parameter being the service quality requirement of the data packet as an example, the target path is selected according to one or more of the delay, the rate, and the reliability. In an example, the target path is selected according to the delay required by the data packet. In an example, the target path is selected according to the rate required by the data packet. In an example, the target path is selected according to the reliability required by the data packet. In an example, the target path is selected according to the delay and rate required by the data packet. In an example, the target path is selected according to the delay, the rate, and the reliability required by the data packet.

In some embodiments of the present disclosure, the service quality requirement of the data packet is embodied through a data radio bearer (DBR), and may also be embodied through a service data flow. Optionally, different DRB IDs or flow IDs correspond to different service quality requirements, where the DBRs are data bearers that correspond to different services and are allocated by a radio side; and the service data flows are bearing modes corresponding to the different services on the radio side.

Taking the service parameter being the slice corresponding to the data packet as an example, the target path is selected according to a slice corresponding to a service to which the data packet belongs, that is, the slice corresponding to the data packet.

The slice or slicing refers to logical division and encapsulation of end-to-end network resources (network functions, physical hardware and interface pipeline resources, etc.) by a network according to bearer services' own characteristics and requirements so as to meet service quality requirements for network performances such as a network bandwidth, the delay and the reliability by different services.

Optionally, the division of the slices may be based on service scenarios. For example, a slice corresponding to an enhance mobile broadband (eMBB) service is an eMBB slice, a slice corresponding to an Internet of Things (IoT) service is an IoT slice, and a slice corresponding to an ultra-reliable low latency communications (uRLLC) service is an uRLLC slice.

Optionally, the division of the slices may be based on service types. For example, a slice corresponding to a game service is slice 1, a slice corresponding to a small packet service is slice 2, and a slice corresponding to a packaging service is slice 3, where the small packet service refers to a service with the small number of data packets, such as text information of instant messaging, and the packaging service refers to a service with the large number of data packets, such as a video stream. Optionally, the data volume of the data packet can be determined based on a specified threshold. When the data volume of the data packet is greater than the specified threshold, the data packet belongs to the large packet service, and when the data volume of the data packet is less than the specified threshold, the data packet belongs to the small packet service.

Taking the service parameter being the service quality requirement of the data packet and the corresponding slice as an example, the target path is selected according to the service quality requirement of the data packet and the slice corresponding to the service to which the data packet belongs, that is, the slice corresponding to the data packet. In an example, the slice corresponding to the data packet is slice 1, and the target path is selected according to the delay required by the data packet and slice 1. In an example, the slice corresponding to the data packet is slice 2, and the target path is selected according to the rate required by the data packet and slice 2. In an example, the slice corresponding to the data packet is slice 2, and the target path is selected according to slice 1 and the reliability required by the data packet. In an example, the target path is selected according to the delay and the rate required by the data packet. In an example, the slice corresponding to the data packet is slice 3, and the target path is selected according to slice 3 and the delay, the rate, and the reliability required by the data packet.

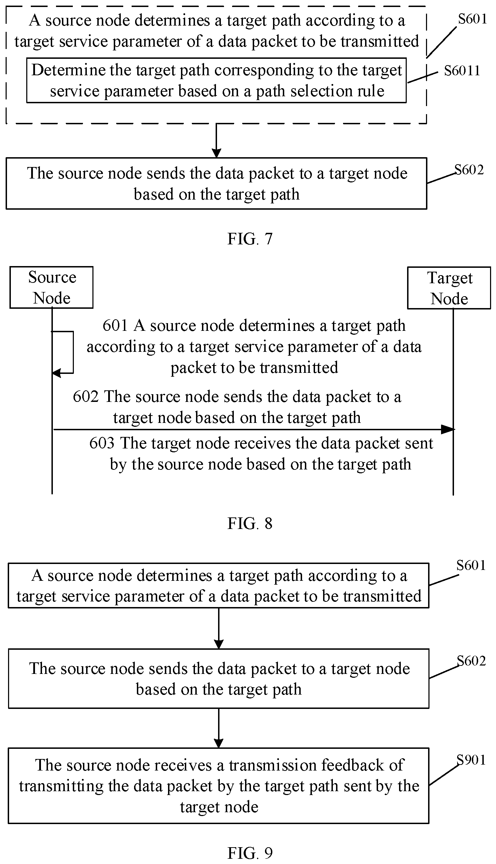

Optionally, as shown in FIG. 7, the S601 may be executed as S6011: determining the target path corresponding to the target service parameter based on a path selection rule.

Optionally, the path selection rule includes: a correspondence between a service parameter and a path, and the service parameter includes at least one of the service quality requirement or the slice.

In some embodiments of the present disclosure, the source node includes a correspondence between the service quality requirement and the path or a correspondence between the slice and the path.

In the correspondence, one service parameter corresponds to one or more paths. Optionally, in the correspondence between the service quality requirement and the path or the correspondence between the slice and the path, one service quality requirement or one slice corresponds to one path. Optionally, in the correspondence between the service quality requirement and the path or the correspondence between the slice and the path, one service quality requirement or one slice corresponds to multiple paths.

In an example, assuming that the service quality requirement is the delay and the target path is determined according to the correspondence between the service quality requirement and the path, delay 1 corresponds to path A, delay 2 corresponds to path B, and delay 3 corresponds to path C. When the delay required by the data packet to be transmitted is delay 2, the target path is path B. Path A includes one path of path 1, path B includes one path of path 2 and path 3, and path C includes one path of path 4.

In an example, assuming that the service quality requirement is the reliability and the target path is determined according to the correspondence between the service quality requirement and the path, reliability 1 corresponds to path A, reliability 2 corresponds to path B, and reliability 3 corresponds to path D. When the reliability required by the data packet to be transmitted is reliability 2, the target path is path B.

In an example, assuming that the service quality requirement includes the rate and the reliability and the target path is determined according to the correspondence between the service quality requirement and the path, rate 1 and reliability 1 correspond to path A, rate 1 and reliability 2 correspond to path C, rate 2 and reliability 1 correspond to path D, and rate 2 and reliability 2 correspond to path E. When the rate required by the data packet to be transmitted is rate 1 and the reliability required by the data packet to be transmitted is reliability 2, the target path is path C.

In an example, assuming that the target path is determined according to the correspondence between the slice and the path, slice 1 corresponds to path A, slice 2 corresponds to path E, and slice 3 corresponds to path F. When the slice corresponding to the data packet to be transmitted is slice 2, the target path is path E.

In the embodiments of the present disclosure, a type of the service parameter of the data packet to be transmitted is determined from the path selection rule so as to indicate whether the service parameter of the data packet to be transmitted is the service quality requirement or the slice.

In the embodiments of the present disclosure, different service parameters correspond to different path selection rules.

Based on different types of service parameters, the path selection rules include:
path selection rule 1: the correspondence between the service quality requirement and the path, so that the target path for transmitting the data packet to be transmitted is selected according to the service quality requirement;
path selection rule 2: the correspondence between the slice and the path, so that the target path for transmitting the data packet to be transmitted is selected according to the slice; and
path selection rule 3: the correspondence between the service quality requirement, the slice and the path, so that the target path for transmitting the data packet to be transmitted is selected according to the service quality requirement and the slice.

When the path selection rule is path selection rule 1, the target path corresponding to the service quality requirement of the data packet to be transmitted is determined according to the correspondence between the service quality requirement and the path.

When the path selection rule is path selection rule 2, the target path corresponding to the slice corresponding to the data packet to be transmitted is determined according to the correspondence between the slice and the path.

When the path selection rule is path selection rule 3, the target path corresponding to the service quality requirement and the corresponding slice of the data packet to be transmitted is determined according to the correspondence between the service quality requirement, the slice and the path.

In the embodiments of the present disclosure, a configuration manner for the path selection rule includes one of the following configuration manners:
configuration manner 1: being configured by the source node; or
configuration manner 2: being configured by the network device through indication information.

Optionally, in the configuration manner 2, the indication information indicates an identifier of the configured path selection rule. In this case, there are path selection rule 1, path selection rule 2 and path selection rule 3 included in the source node, and based on the indication information, it is determined that the path selection rules used in selection of the target path is path selection rule 1, path selection rule 2, or path selection rule 3.

Optionally, in the configuration manner 2, the indication information is content of the path selection rule.

In an example, the indication information is path selection rule 1: the correspondence between the service quality requirement and the path, to indicate that the target path for transmitting the data packets to be transmitted is selected according to the service quality requirement.

In an example, the indication information is path selection rule 2: the correspondence between the slice and the path, to indicate that the target path for transmitting the data packet to be transmitted is selected according to the slice.

In the embodiments of the present disclosure, in a case where the indication information indicates that the configured path selection rule is path selection rule 1, the indication information indicates the service quality requirement type for selecting the target path.

In an example, the indication information indicates that the configured path selection rule is path selection rule 1, and that the service quality requirement is the delay and the rate. In an example, the indication information indicates that the configured path selection rule is path selection rule 1, and that the service quality requirement is the delay and the reliability.

Optionally, in a case where the path selection rule is configured by the network device through the indication information, the indication information is sent through a system message or dedicated signaling.

Optionally, the dedicated signaling includes one of the following messages: radio resource control (RRC) layer signaling, media access control (MAC) layer signaling, or physical layer control signaling.

In the embodiments of the present disclosure, a transmission mode of the path includes: a connection-based transmission mode; or a connectionless-based transmission mode.

For a path whose transmission mode is the connection-based transmission mode, the path can also be referred to as a connection-based path. The connection-based path means that a connection corresponding to the path needs to be established between the source node and the target node during the communication and a resource is assigned for the path. After the connection is established, the source node uses the resource allocated for the path to perform data transmission.

For a path whose transmission mode is the connectionless-based transmission mode, the path can also be referred to as a connectionless-based path. The connectionless-based path means that the source node and the target node can communicate with each other without establishing a connection therebetween during the communication, for example, a random sending mode is adopted.

In the embodiments of the present disclosure, the correspondence between the service parameter and the path may also include the transmission mode corresponding to the path. In a case where the same path has different transmission modes, the corresponding service quality requirements may be different.

In an example, assuming that the service quality requirement is the delay, the path corresponding to delay 1 is path 1, and the transmission mode of path 1 is the connection-based transmission mode; the path corresponding to delay 2 is path 1, and the transmission mode of path 1 is the connectionless-based transmission mode, where delay 1 is greater than delay 2.

In S602, the source node sends the data packet to the target node based on the target path.

Here, as shown in FIG. 8, the communication method provided by the embodiments of the present disclosure includes:
in S603, the target node receives the data packet sent by the source node based on the target path.

The target path is determined by the source node according to the target service parameter of the data packet, and the target service parameter includes at least one of the following information: the service quality requirement of the data packet, and the slice corresponding to the data packet.

In some embodiments of the present disclosure, after receiving the data packet sent by the source node based on the target path, the target node evaluates a transmission feedback of transmitting the data packet by the target path, and sends to the source node the transmission feedback of transmitting the data packet by the target path.

Here, in a case where the target node sends to the source node the transmission feedback of transmitting the data packet by the target path, as shown in FIG. 9, the method further includes:
in S901, the source node receives the transmission feedback of transmitting the data packet by the target path sent by the target node.

Optionally, the transmission feedback of the target path transmitting the data packet by the target path includes: a transmission result of transmitting the data packet by the target path.

Optionally, when a transmission mode of the target path is the connectionless-based transmission mode, the transmission feedback of transmitting the data packet by the target path includes: a service quality requirement for transmitting the data packet by the target path.

In an example where the transmission feedback includes the transmission result, in a case where the target path includes one or more paths, it makes statistics on a transmission result of whether a characteristic data packet corresponding to each path in the target path is successfully transmitted, and feeds back the transmission result of each path to the source node.

In an example, the target path includes: path 1 and path 2, the transmission result can transmit result indication information: 1112, where I1 is the transmission result corresponding to path 1, and I2 is the transmission result corresponding to path 2. In a case where 1112 is 10, it indicates that the transmission of path 1 is successful and the transmission of path 2 fails.

In the embodiments of the present disclosure, there is no limitation on the indicating mode of the transmission feedback.

In an example where the transmission feedback includes the service quality requirement, the target node evaluates the service quality requirement of the target path, and feeds back the evaluated service quality requirement to the source node, so that the source node updates the service quality requirement corresponding to the target path in the correspondence between the service quality requirement and the path based on the received service quality requirement.

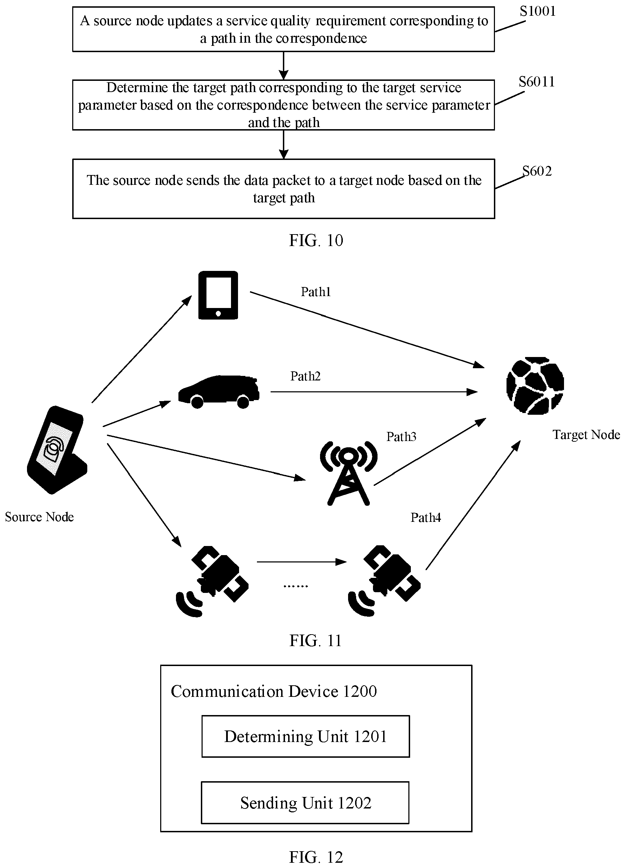

In some embodiments of the present disclosure, when the transmission mode of the path is the connectionless-based transmission mode, and the service parameter is the service quality requirement, as shown in FIG. 10, the method includes:
in S1001, the source node updates the service quality requirement corresponding to the target path.

In some embodiments of the present disclosure, before the S1001, the target node evaluates the service quality requirement of the target path, and sends the evaluated service quality requirement to the source node.

After receiving the evaluated service quality requirement sent by the target node, the source node updates the service quality requirement corresponding to the target path based on the received evaluated service quality requirement.

Depending on different data used in evaluating the service quality requirement, an evaluation manner for evaluating the service quality requirement of the path with the transmission mode of the connectionless-based transmission mode by the target node includes:
evaluation manner A1: evaluating a service quality requirement of transmitting the last data packet by the target path; and
evaluation manner A2: receiving a heartbeat packet sent by the source node based on the target path, and evaluating a service quality requirement of transmitting the heartbeat packet by the target path.

In a case where the evaluation manner is the evaluation manner A1, the source node uses the received service quality requirement of transmitting the last data packet by the target path sent by the target node as the service quality requirement corresponding to the target path.

When the source node sent the data packet to the target node based on the connectionless target path last time, the target node evaluates, according to the reception of the data packet, the service quality requirement in a case where the transmission mode of the target path is the connectionless-based transmission mode, and feeds back the evaluated service quality requirement to the source node. The source node updates, based on the service quality requirement fed back by the target node, the corresponding service quality requirement in the path correspondence in the case where the transmission mode of the target path is the connectionless-based transmission mode, and updates it to the service quality requirement received from the target node.

In an example, the data packet to be transmitted is data packet 1, the last transmitted data packet, that is, the data packet that was transmitted in last time, is data packet 2. After the source node sends the data packet 2 to the target node based on path X with the transmission mode of the connectionless-based transmission mode, the target node evaluates, based on the received data packet 2, the service quality requirement when the transmission mode of path X is the connectionless-based transmission mode, and sends the evaluated service quality requirement to the source node. The source node updates the service quality requirement in the case where the transmission mode of path X is the connectionless-based transmission mode.

When the evaluation manner is the evaluation manner A2, updating the service quality requirement corresponding to the path by the source node includes: the source node sends the heartbeat packet to the target node based on the target path, and uses a service quality requirement of transmitting the heartbeat packet by the path sent by the target node as the service quality requirement corresponding to the target path.

The source node periodically sends the heartbeat packet to the target node based on the target path with the transmission mode of the connectionless-based transmission mode. The target node receives the heartbeat packets based on the target path with the transmission mode of the connectionless-based transmission mode, evaluates the service quality requirement when the transmission mode of the target path is the connectionless-based transmission mode, and feeds back the evaluated service quality requirement to the source node. The source node updates the service quality requirement of the connectionless-based target path, and updates it to the service quality requirement received from the target node.

In the embodiments of the present disclosure, the source node periodically sends the heartbeat packet to the target node based on all or part of the possible connectionless-based paths including the target path. The target node evaluates the service quality requirement of each connectionless-based path based on the heartbeat packet received based on each connectionless-based path, and feeds back the service quality requirement of each connectionless-based path to the source node. The source node updates the service quality requirement of each connectionless-based target path, and updates it to the service quality requirement of the corresponding path received from the target node.

In some embodiments of the present disclosure, depending on different forwarding nodes based on which the service quality requirement is evaluated, evaluating the service quality requirement of the target path by the target node includes:
evaluation manner B1: obtaining a service quality requirement of each forwarding node in the target path, and obtaining the service quality requirement of the target path based on the service quality requirement of each forwarding node; and
evaluation manner B2: obtaining a service quality requirement of a forwarding node with the worst service quality requirement in the target path.

In the evaluation manner B1, the target node obtains a service quality requirement of each hop in the target path, and aggregates the service quality requirement of each hop to obtain the service quality requirement of the entire target path.

In an example, the target path includes two forwarding nodes: forwarding node 1 and forwarding node 2. A delay of forwarding node 1 and a delay of forwarding node 2 are obtained, respectively, and the delay of the target path is obtained based on the delay of forwarding node 1 and the delay of forwarding node 2.

In evaluation manner B2, the target node takes a service quality requirement of the worst hop between the source node and the target node as the service quality requirement of the target path.

In an example, the target path includes two forwarding nodes: forwarding node 1 and forwarding node 2. A rate of forwarding node 1 and a rate of forwarding node 2 are obtained, respectively, and the smaller one of the two rates is used as the rate of the target path.

In some embodiments of the present disclosure, the indication mode of the evaluated service quality requirement includes: the service quality requirement; or rank information corresponding to the service quality requirement.

In an example where the indication mode of the service quality requirement is the service quality requirement, the target node sends the evaluated service quality requirement itself to the source node. For example, if the estimated delay is 10 microseconds (µs), the indication information is a delay of 10 µs.

In an example where the indication mode of the service quality requirement is the rank corresponding to the service quality requirement, the target node sends the rank corresponding to the evaluated service quality requirement to the source node. For example, if the estimated delay is 10 µs, and the rank corresponding to the delay of 10 µs is rank 1, the indication information is indication information indicating that the delay is rank 1.

In the embodiments of the present disclosure, the source node determines the target path according to the target service parameter of the data packet to be transmitted, and the target service parameter includes at least one of the service quality requirement of the data packet and the slice corresponding to the data packet; and the source node sends the data packet to the target node based on the target path. Therefore, the path for transmitting the data packet is selected in a network based on the service quality requirement of the data packet or the slice corresponding to the data packet, which reduces the resource waste while ensuring the transmission of the data packet.

Hereinafter, the communication method provided by the embodiments of the present disclosure will be illustrated by using different examples.

In the future wireless network, the source node and the destination node can be directly connected in a single hop through Uu/SL, or can be connected in a multi-hop manner to ensure the data transmission. Based on the data volume, data transmission can be performed between the source node and the destination node in a connectionless-based manner or in a connection-based manner, where the connectionless-based manner means that the source node and the target node can communicate with each other without establishing the connection during the communication, for example, by using a random sending mode, and the connection-based manner means that it needs to establish the connection between the source node and the target node during the communication, and the resource allocated to the established connection is used for data transmission without any resource collision.

Example 1: the source node selects a path for data transmission based on the path selection rule.

When performing the data transmission, the source node (such as the terminal or the base station) may use a single forwarding node, that is, a single hop, to directly transmit the data to the destination node; or it may transmit the data to the destination node through multiple forwarding nodes, that is, a multi-hop manner. As shown in FIG. 11, the path for data transmission between the source node and the target node includes four paths: path 1, path 2, path 3, and path 4. Path 1 includes one access node: a mobile terminal, path 2 includes one access point: a vehicle, path 3 includes one access point: a base station, and path 4 includes two access points: satellite 1 and satellite 2, and path 1, path 2, and path 3 are paths based on the single hop, and path 4 is a multi-hop-based path.

The source node can select the path for data transmission based on the path selection rule, and the path selection rule may include:
path selection rule 1: selecting the path based on the service quality requirement; and
path selection rule 2: selecting the path based on the slice.

Based on path selection rule 1, the source node can select the path according to one or more of service quality requirements such as the delay, the rate, and the reliability of the data packet to be transmitted. For example, if the delay required by the data packet to be transmitted is relatively short, the source node can use a path with a short delay, that is, one or more paths with the short delay, to transmit the data packet; for example, if the data packet to be transmitted requires a certain rate, the source node can use a path that meets the rate requirement, that is, one or more paths that meet the rate requirement, to transmit the data packet. When multiple paths are used, the multiple paths jointly meet the data packet transmission at a certain rate. For example, if the data packet to be transmitted requires a certain reliability, the source node can use a path that meets the reliability requirement, that is, one or more paths that meet the reliability requirement, to transmit the data packet.

In practical applications, the service quality requirement can also include content other than the delay, the rate, and the reliability. The service quality requirement for selecting the path may be a combination of one or more of the service quality requirements mentioned above.

Different service quality requirements can be embodied through the data radio bearer, or through the service data flow. The data radio bearer refers to a data bearer that corresponds to a different service and is allocated by the radio side; and the service data flow is also a bearing mode corresponding to the different service on the radio side. The service quality requirement can be determined through DRB ID or flow ID.

Based on path selection rule 2, the source node selects the path according to the slice of the service to which the data packet to be transmitted belongs. For example, if the transmitted data packet belongs to the game service, and a path corresponding to slice x of the game service is path X, the source node performs data transmission through path X. Path X may include one path or multiple paths, and path X may include the connection-based path, or may include the connectionless-based path. For example, if the data packet to be transmitted belongs to the small packet service, the slice corresponding to the small packet service (such as WeChat, QQ information) is slice y, and the path corresponding to slice y is path Y. Path Y includes one or more connectionless-based paths, and the source node can transmit the data directly through the one or more connectionless-based paths, thereby avoiding signaling waste. For example, if the transmitted data packet belongs to the large packet service (such as the video stream) requiring stable transmission, the slice corresponding to the large packet service is slice z, the path corresponding to slice z is path Z, and path Z includes the connection-based path, the source node can establish the connection via a stable link so as to ensure the quality of service transmission.

The path selection rule is configured by the network to the source node through the indication information, and the indication information may be the system information or the dedicated signaling, including dedicated RRC signaling, MAC signaling, or physical layer control signaling.

When the data packet arrives at the destination node through one or more paths, the destination node can feed back the transmission result of each path through the signaling. For example, the data packet is transmitted through the four paths of A, B, C, and D, and four bits corresponding to the four paths are used to indicate transmission results of individual paths, respectively. For example, when the bits are indicated as 1010, it means that the transmissions of paths A and C are successful, and the transmissions of B and D fail. The signaling used by the target node to feed back the transmission result may be the dedicated signaling such as acknowledgement signaling or broadcast signaling such as paging.

Example 2: the target node feeds back evaluation information of the service quality requirement of the connectionless-based path to the source node.

As described in example 1, the source node selects different paths for data transmission according to the path selection rule. In order to apply the path selection rule, especially rule 1 in which different paths are selected based on the service quality requirements, when the path is the connectionless path, it needs to evaluate conditions of the paths, including the service quality requirements in terms of path delay, throughput, and reliability.

Here, the target node may evaluate the service quality requirement of the connectionless-based path, and send the evaluated service quality requirement to the source node, and the source node updates the service quality requirement corresponding to the path to the received service quality requirement.

A manner for obtaining the evaluated service quality requirement includes:
Manner 1: taking a condition where the source node sent the data through the connectionless-based path last time as a reference.

In an example, when the source node sent the data packet to the destination node last time, the destination node side provides a corresponding evaluation result of the service quality requirement according to the reception situation of the data packet, and feeds back the evaluated service quality requirement to the source node. Aspects to be evaluated include: the service quality requirement such as the delay, the obtained rate/link quality, and the number of retransmissions.

The above service quality requirement (the delay, the obtained rate/link quality, and the number of retransmissions) is obtained by the destination node from the forwarding node that forwards the data packet as a control part of the data packet, or obtained by the destination node from the forwarding node that forwards the data packet as a separate control packet. In the evaluation by the destination node, it can consider evaluating a total path from the source node to the destination node, or evaluating the worst hop from the source node to the destination node, that is, a forwarding node with the worst service quality requirement.

Manner 2: using the heartbeat packet for path maintenance of the connectionless path, that is, the source node regularly and periodically sends the heartbeat packet to the destination node on the connectionless-based path where the data transmission is possible, and the destination node evaluates the service quality requirement of the connectionless-based path, such as the delay, the link quality, and the number of retransmissions from the reception situation of the heartbeat packet. The destination node feeds back the evaluation result to the source node, facilitating the source node to select the connectionless-based path.

The above evaluation result can be fed back to the source node by the destination node through the specific signaling. Specific information of the evaluation result fed back includes the delay, the link quality, and the number of retransmissions, or may be rank information of coarse granularity, such as good, medium, and bad.

In order to implement the foregoing communication method, the embodiments of the present disclosure also provide a communication device. A composition structure of the communication device is as shown in FIG. 12. A communication device 1200 includes:
a determining unit 1201, configured to determine a target path according to a target service parameter of a data packet to be transmitted, where the target service parameter includes at least one of a service quality requirement of the data packet and a slice corresponding to the data packet; and
a sending unit 1202, configured to send the data packet to a target node based on the target path.

In some embodiments of the present disclosure, the determining unit 1202 is further configured to:
determine the target path corresponding to the target service parameter based on a path selection rule.

In some embodiments of the present disclosure, the path selection rule includes a correspondence between a service parameter and a path, and the service parameter includes at least one of a service quality requirement or a slice.

In some embodiments of the present disclosure, a configuration manner for the path selection rule includes:
being configured by the source node; or
being configured by a network device through indication information.

In some embodiments of the present disclosure, in a case where the path selection rule is configured by the network device through the indication information, the indication information is sent through a system message or dedicated signaling.

In some embodiments of the present disclosure, the dedicated signaling includes one of the following messages: radio resource control (RRC) layer signaling, media access control (MAC) layer signaling, or physical layer control signaling.

In some embodiments of the present disclosure, one service parameter corresponds to one or more paths in the correspondence.

In some embodiments of the present disclosure, a transmission mode of the path includes:
a connection-based transmission mode; or
a connectionless-based transmission mode.

In some embodiments of the present disclosure, the communication device further includes:
a first receiving unit, configured to receive a transmission feedback of transmitting the data packet by the target path sent by the target node.

In some embodiments of the present disclosure, the transmission feedback of transmitting the data packet by the target path includes: a transmission result of transmitting the data packet by the target path.

In some embodiments of the present disclosure, when a transmission mode of the target path is the connectionless-based transmission mode, the transmission feedback of transmitting the data packet by the target path includes: a service quality requirement for transmitting the data packet by the target path.

In some embodiments of the present disclosure, the communication device further includes: an updating unit, configured to:
update the service quality requirement corresponding to the target path, when the transmission mode of the target path is the connectionless-based transmission mode, and the service parameter is the service quality requirement.

In some embodiments of the present disclosure, the updating unit is further configured to:
use a received service quality requirement of transmitting the last data packet by the target path sent by the target node as the service quality requirement corresponding to the target path.

In some embodiments of the present disclosure, the updating unit is further configured to:
send a heartbeat packet to the target node based on the target path; and
use a service quality requirement of transmitting the heartbeat packet by the path sent by the target node as the service quality requirement corresponding to the target path.

In some embodiments of the present disclosure, the service quality requirement includes at least one of a delay, a rate, and reliability.

The embodiments of the present disclosure further provide a communication device, including a processor and a memory for storing a computer program that can run on the processor. The processor is configured to execute steps of the above-mentioned communication method performed by the communication device 1200, when running the computer program.

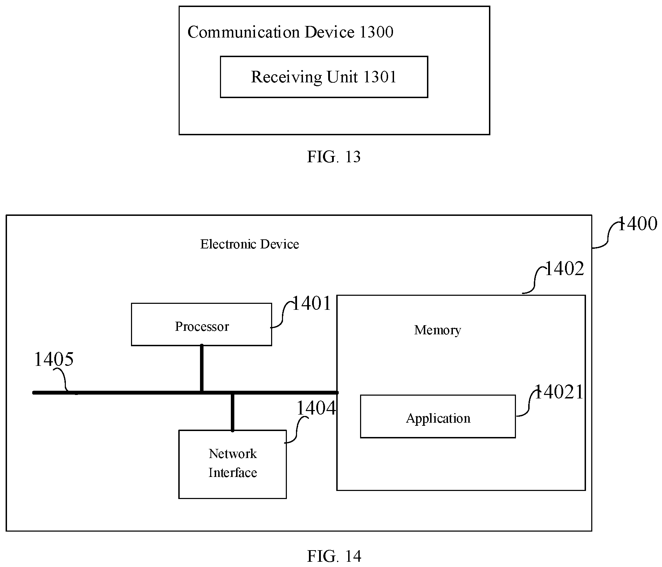

The embodiments of the present disclosure also provide a terminal device. A schematic diagram of a composition structure of the terminal device is as shown in FIG. 13. The terminal device 1300 includes:
a second receiving unit 1301, configured to receive a data packet sent by a source node based on a target path, where the target path is determined by the source node according to a target service parameter of the data packet, and the target service parameter includes at least one of a service quality requirement of the data packet and a slice corresponding to the data packet.

In some embodiments of the present disclosure, the terminal device further includes:
a first evaluating unit, configured to evaluate a transmission feedback of transmitting the data packet by the target path; and
a first feedback unit, configured to send to the source node the transmission feedback of transmitting the data packet by the target path.

In some embodiments of the present disclosure, the transmission feedback of transmitting the data packet by the target path includes:
a transmission result of transmitting the data packet by the target path.

In some embodiments of the present disclosure, when a transmission mode of the target path is a connectionless-based transmission mode, the transmission feedback of transmitting the data packet by the target path includes: a service quality requirement of transmitting the data packet by the target path.

In some embodiments of the present disclosure, the communication device further includes:
a second evaluating unit, configured to evaluate a service quality requirement of the target path, when the transmission mode of the target path is the connectionless-based transmission mode, and the service parameter is the service quality requirement; and
a second feedback unit, configured to send the evaluated service quality requirement to the source node.

In some embodiments of the present disclosure, the second evaluating unit is further configured to:
evaluate a service quality requirement of transmitting the last data packet by the target path.

In some embodiments of the present disclosure, the second evaluating unit is further configured to:
receive a heartbeat packet sent by the source node based on the target path, and evaluate a service quality requirement of transmitting the heartbeat packet by the target path.

In some embodiments of the present disclosure, the second evaluating unit is further configured to:
obtain a service quality requirement of each forwarding node in the target path, and obtain the service quality requirement of the target path based on the service quality requirement of each forwarding node; or
obtain a service quality requirement of a forwarding node with the worst service quality requirement in the target path.

In some embodiments of the present disclosure, an indication mode of the evaluated service quality requirement includes:
the service quality requirement; or
a rank corresponding to the service quality requirement.

In some embodiments of the present disclosure, the service quality requirement includes at least one of a delay, a rate, and reliability.

The embodiments of the present disclosure also provide a communication device, including a processor and a memory for storing a computer program that can run on the processor. The processor is configured to execute steps of the above-mentioned communication method performed by the communication device 1300, when running the computer program.

FIG. 14 is a schematic diagram of the hardware composition structure of an electronic device (communication device) according to an embodiment of the present disclosure. The electronic device 1400 includes at least one processor 1401, a memory 1402, and at least one network interface 1404. The various components in the electronic device 1400 are coupled together through a bus system 1405. It can be understood that the bus system 1405 is used to implement connection and communication between these components. In addition to the data bus, the bus system 1405 further includes a power bus, a control bus, and a status signal bus. However, for the sake of clear description, various buses are marked as the bus system 1405 in FIG. 14.

It can be understood that the memory 1402 may be a volatile memory or a non-volatile memory, and may also include both the volatile and non-volatile memories. Among them, the non-volatile memory can be a ROM, a Programmable Read-Only Memory (PROM), an Erasable Programmable Read-Only Memory (EPROM), an electrically erasable Programmable read-only memory (EEPROM), a ferromagnetic random access memory (FRAM), a Flash Memory, a magnetic surface memory, an optical disk, or a Compact Disc Read-Only Memory (CD-ROM). The magnetic surface memory can be disk storage or tape storage. The volatile memory may be a random access memory (RAM), which serves as an external cache. By way of example rather than limitation, many forms of RAMs are available, such as a static random access memory (SRAM), a synchronous static random access memory (SSRAM), a dynamic random access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM)). The memory 1402 described in the embodiments of the present disclosure is intended to include, but is not limited to, these and any other suitable types of memories.

The memory 1402 according to the embodiments of the present disclosure is used to store various types of data to support the operation of the electronic device 1400. Examples of these data include any computer program used to be operated on the electronic device 1400, such as an application program 14021. The program for implementing the method of the embodiments of the present disclosure may be included in the application program 14021.

The method described in the embodiments of the present disclosure may be applied to the processor 1401 or implemented by the processor 1401. The processor 1401 may be an integrated circuit chip with signal processing capabilities. In the implementation process, the steps of the foregoing methods can be completed by hardware integrated logic circuits in the processor 1401 or instructions in the form of software. The processor 1401 may be a general-purpose processor, a digital signal processor (DSP), or other programmable logic devices, discrete gate or transistor logic devices, discrete hardware components, and the like. The processor 1401 may implement or execute various methods, steps, and logical block diagrams disclosed in the embodiments of the present disclosure. The general-purpose processor may be a microprocessor or any conventional processor or the like. The steps of the methods disclosed in connection with the embodiments of the present disclosure may be directly embodied as being executed and completed by a hardware decoding processor, or executed and completed by a combination of hardware and software modules in the decoding processor. The software modules may be located in a storage medium, and the storage medium is located in the memory 1402. The processor 1401 reads the information in the memory 1402 and completes the steps of the foregoing methods in combination with its hardware.

In an exemplary embodiment, the electronic device 1400 may be implemented by one or more of an application specific integrated circuits (ASIC), a DSP, a Programmable Logic Device (PLD), and a complex programmable logic device (CPLD), a FPGA, a general-purpose processor, a controller, a MCU, a MPU, or other electronic components so as to perform the foregoing methods.

The embodiments of the present disclosure further provides a storage medium for storing computer programs.

Optionally, the storage medium may be applied to the communication device provided in the embodiments of the present disclosure, and the computer program causes a computer to execute the corresponding process in the methods of the embodiments of the present disclosure. For the sake of brevity, details are not described herein again.

The present disclosure is described with reference to flowcharts and/or block diagrams of the methods, devices (systems), and computer program products according to embodiments of the present disclosure. It should be understood that each process and/or block in the flowcharts and/or block diagrams, and the combination of processes and/or blocks in the flowcharts and/or block diagrams can be implemented by computer program instructions. These computer program instructions can be provided to a processor of a general-purpose computer, a special-purpose computer, an embedded processor, or other programmable data processing device to generate a machine to cause a device that implements the functions specified in one process or multiple processes in the flowchart and/or one block or multiple blocks in the block diagram to be generated through the instructions executed by the processor of the computer or other programmable data processing device.

These computer program instructions can also be stored in a computer-readable memory that can direct a computer or other programmable data processing devices to work in a specific manner, so that the instructions stored in the computer-readable memory produce an article of manufacture including an instruction device, and the instruction device implements the functions specified in one process or multiple processes in the flowchart and/or one block or multiple blocks in the block diagram.

These computer program instructions can also be loaded on a computer or other programmable data processing devices, to cause a series of operation steps being executed on the computer or other programmable devices to produce computer-implemented processing, so that the instructions executed on the computer or other programmable devices provide steps for implementing functions specified in a flow or multiple flows in the flowchart and/or a block or multiple blocks in the block diagram.

Those described above are only some embodiments of the present disclosure, and are not intended to limit the protection scope of the present disclosure. Any modifications, equivalent substitutions and improvement made within the spirit and principle of the present disclosure shall fall within the protection scope of the present disclosure.

## Claims

1. A communication method, comprising:
determining, by a source node, a target path according to a target service parameter of a data packet to be transmitted, wherein the target service parameter comprises at least one of a service quality requirement of the data packet and a slice corresponding to the data packet; and
sending, by the source node, the data packet to a target node based on the target path.

2. The method according to claim 1, wherein the determining the target path according to the target service parameter of the data packet to be transmitted comprises:
determining the target path corresponding to the target service parameter based on a path selection rule.

3. The method according to claim 2, wherein the path selection rule comprises a correspondence between a service parameter and a path, and the service parameter comprises at least one of the service quality requirement or the slice.

4. The method according to claim 2 or 3, wherein a configuration manner for the path selection rule comprises:
being configured by the source node; or
being configured by a network device through indication information.

5. The method according to claim 4, wherein, in a case where the path selection rule is configured by the network device through the indication information, the indication information is sent through a system message or dedicated signaling.

6. The method according to claim 5, wherein the dedicated signaling comprises one of radio resource control (RRC) layer signaling, media access control (MAC) layer signaling, or physical layer control signaling.

7. The method according to any one of claims 3 to 6, wherein one service parameter corresponds to one or more paths in the correspondence.

8. The method according to any one of claims 3 to 7, wherein a transmission mode of the path comprises:
a connection-based transmission mode; or
a connectionless-based transmission mode.

9. The method according to any one of claims 1 to 8, wherein the method further comprises:
receiving, by the source node, a transmission feedback of transmitting the data packet by the target path sent by the target node.

10. The method according to claim 9, wherein the transmission feedback of transmitting the data packet by the target path comprises a transmission result of transmitting the data packet by the target path.

11. The method according to claim 9, wherein when a transmission mode of the target path is a connectionless-based transmission mode, the transmission feedback of transmitting the data packet by the target path comprises: a service quality requirement of transmitting the data packet by the target path.

12. The method according to any one of claims 1 to 11, wherein when a transmission mode of the target path is a connectionless-based transmission mode, and the service parameter is the service quality requirement, the method further comprises:
updating, by the source node, the service quality requirement corresponding to the target path.

13. The method according to claim 12, wherein the updating the service quality requirement corresponding to the target path comprises:
using a received service quality requirement of transmitting the last data packet by the target path sent by the target node as the service quality requirement corresponding to the target path.

14. The method according to claim 12, wherein the updating the service quality requirement corresponding to the target path comprises:
sending a heartbeat packet to the target node based on the target path; and
using a service quality requirement of transmitting the heartbeat packet by the path sent by the target node as the service quality requirement corresponding to the target path.

15. The method according to any one of claims 1 to 14, wherein the service quality requirement comprises at least one of a delay, a rate, and reliability.

16. A communication method, comprising:
receiving, by a target node, a data packet sent by a source node based on a target path, wherein the target path is determined by the source node according to a target service parameter of the data packet, and the target service parameter comprises at least one of a service quality requirement of the data packet and a slice corresponding to the data packet.

17. The method according to claim 16, wherein the method further comprises:
evaluating, by the target node, a transmission feedback of transmitting the data packet by the target path; and
sending, by the target node, the transmission feedback of transmitting the data packet by the target path to the source node.

18. The method according to claim 17, wherein the transmission feedback of transmitting the data packet by the target path comprises:
a transmission result of transmitting the data packet by the target path.

19. The method according to claim 17, wherein, when a transmission mode of the target path is a connectionless-based transmission mode, the transmission feedback of transmitting the data packet by the target path comprises: a service quality requirement of transmitting the data packet by the target path.

20. The method according to claims 16 to 19, wherein when a transmission mode of the target path is a connectionless-based transmission mode, and the service parameter is the service quality requirement, the method further comprises:
evaluating, by the target node, the service quality requirement of the target path; and
sending, by the target node, the evaluated service quality requirement to the source node.

21. The method according to claim 20, wherein the evaluating the service quality requirement of the target path comprises:
evaluating a service quality requirement of transmitting the last data packet by the target path.

22. The method according to claim 20, wherein evaluating the service quality requirement of the path with a transmission mode of the connectionless-based transmission mode comprises:
receiving a heartbeat packet sent by the source node based on the target path, and evaluating a service quality requirement of transmitting the heartbeat packet by the target path.

23. The method according to any one of claims 20 to 22, wherein the evaluating the service quality requirement of the target path comprises:
obtaining a service quality requirement of each forwarding node in the target path, and obtaining the service quality requirement of the target path based on the service quality requirement of each forwarding node; or
obtaining a service quality requirement of a forwarding node with the worst service quality requirement in the target path.

24. The method according to any one of claims 20 to 23, wherein an indication mode of the evaluated service quality requirement comprises:
the service quality requirement; or
a rank corresponding to the service quality requirement.

25. The method according to any one of claims 16 to 24, wherein the service quality requirement comprises at least one of a delay, a rate, and reliability.

26. A communication device, comprising:
a determining unit, configured to determine a target path according to a target service parameter of a data packet to be transmitted, wherein the target service parameter comprises at least one of a service quality requirement of the data packet and a slice corresponding to the data packet; and
a sending unit, configured to send the data packet to a target node based on the target path.

27. The communication device according to claim 26, wherein the determining unit is further configured to:
determine the target path corresponding to the target service parameter based on a path selection rule.

28. The communication device according to claim 27, wherein the path selection rule comprises a correspondence between a service parameter and a path, and the service parameter comprises at least one of the service quality requirement or the slice.

29. The communication device according to claim 27 or 28, wherein a configuration manner for the path selection rule comprises:
being configured by a source node; or
being configured by a network device through indication information.

30. The communication device according to claim 29, wherein, in a case where the path selection rule is configured by the network device through the indication information, the indication information is sent through a system message or dedicated signaling.

31. The communication device according to claim 30, wherein the dedicated signaling comprises one of radio resource control (RRC) layer signaling, media access control (MAC) layer signaling, or physical layer control signaling.

32. The communication device according to any one of claims 28 to 31, wherein one service parameter corresponds to one or more paths in the correspondence.

33. The communication device according to any one of claims 28 to 32, wherein a transmission mode of the path comprises:
a connection-based transmission mode; or
a connectionless-based transmission mode.

34. The communication device according to any one of claims 26 to 34, wherein the communication device further comprises:
a first receiving unit, configured to receive a transmission feedback of transmitting the data packet by the target path sent by the target node.

35. The communication device according to claim 34, wherein the transmission feedback of transmitting the data packet by the target path comprises a transmission result of transmitting the data packet by the target path.

36. The communication device according to claim 34, wherein when a transmission mode of the target path is a connectionless-based transmission mode, the transmission feedback of transmitting the data packet by the target path comprises: a service quality requirement of transmitting the data packet by the target path.

37. The communication device according to any one of claims 26 to 36, wherein the communication device further comprises an updating unit, configured to:
update the service quality requirement corresponding to the target path, when the transmission mode of the target path is the connectionless-based transmission mode, and the service parameter is the service quality requirement.

38. The communication device according to claim 37, wherein the updating unit is further configured to:
use a received service quality requirement of transmitting the last data packet by the target path sent by the target node as the service quality requirement corresponding to the target path.

39. The communication device according to claim 37, wherein the updating unit is further configured to:
send a heartbeat packet to the target node based on the target path; and
use a service quality requirement of transmitting the heartbeat packet by the path sent by the target node as the service quality requirement corresponding to the target path.

40. The communication device according to any one of claims 26 to 39, wherein the service quality requirement comprises at least one of a delay, a rate, and reliability.

41. A communication device, comprising:
a second receiving unit, configured to receive a data packet sent by a source node based on a target path, wherein the target path is determined by the source node according to a target service parameter of the data packet, and the target service parameter comprises at least one of a service quality requirement of the data packet and a slice corresponding to the data packet.

42. The communication device according to claim 41, wherein the communication device further comprises:
a first evaluating unit, configured to evaluate a transmission feedback of transmitting the data packet by the target path; and
a first feedback unit, configured to send the transmission feedback of transmitting the data packet by the target path to the source node.

43. The communication device according to claim 42, wherein the transmission feedback of transmitting the data packet by the target path comprises:
a transmission result of transmitting the data packet by the target path.

44. The communication device according to claim 42, wherein, when a transmission mode of the target path is a connectionless-based transmission mode, the transmission feedback of transmitting the data packet by the target path comprises: a service quality requirement of transmitting the data packet by the target path.

45. The communication device according to claims 41 to 44, wherein the communication device further comprises:
a second evaluating unit, configured to evaluate a service quality requirement of the target path, when the transmission mode of the target path is the connectionless-based transmission mode, and the service parameter is the service quality requirement; and
a second feedback unit, configured to send the evaluated service quality requirement to the source node.

46. The communication device according to claim 45, wherein the second evaluating unit is further configured to:
evaluate a service quality requirement of transmitting the last data packet by the target path.

47. The communication device according to claim 45, wherein the second evaluating unit is further configured to:
receive a heartbeat packet sent by the source node based on the target path, and evaluate a service quality requirement of transmitting the heartbeat packet by the target path.

48. The communication device according to any one of claims 45 to 47, wherein the second evaluating unit is further configured to:
obtain a service quality requirement of each forwarding node in the target path, and obtain the service quality requirement of the target path based on the service quality requirement of each forwarding node; or
obtain a service quality requirement of a forwarding node with the worst service quality requirement in the target path.

49. The method according to any one of claims 45 to 48, wherein an indication mode of the evaluated service quality requirement comprises:
the service quality requirement; or
a rank corresponding to the service quality requirement.

50. The communication device according to any one of claims 41 to 49, wherein the service quality requirement comprises at least one of a delay, a rate, and reliability.

51. A communication device, comprising:
a processor, and a memory for storing a computer program that is allowed to run on the processor, wherein the processor is configured to execute steps of the communication method according to any one of claims 1 to 15, or execute steps of the communication method according to any one of claims 16 to 25, when running the computer program.

52. A communication device storing an executable program, wherein the executable program, when being executed by a processor, execute the communication method according to any one of claims 1 to 15, or execute the communication method according to any one of claims 16 to 25.
